# EUROPEAN PATENT APPLICATION

(11) **EP 2 457 980 A2**
(43) Date of publication of application: **30.05.2012**
(21) Application number: 11190198.9
(22) Date of filing: 22.11.2011
(51) Int. Cl.: C10J 3/84, C10J 3/72, C10K 1/00, B01D 47/00, F28C 3/00

(54) **Gasification quench chamber baffle**

(30) Priority: 30.11.2010 US 957086
(71) Applicant: General Electric Company, Schenectady, NY 12345 (US)
(72) Inventor: Klockow, Helge Burghard Herwig, Niskayuna, NY 12309 (US); Shufon, Kevin James, Niskayuna, NY 12309 (US)
(74) Representative: Bedford, Grant Richard

(57) **Abstract**

A gasification quench chamber baffle (310, 350) is disclosed. An embodiment of the baffle (310, 350) includes a ring (318, 360) that has a predominantly vertical longitudinal axis; several pipes (354) are attached to the ring (318, 360), where each pipe (354) has an upper end (358) and a lower end. The lower ends of the pipes (354) extend downwards towards a sump in a gasification quench chamber (300). Additionally, there are gussets (314, 356) that are configured to guide water towards the upper ends (358) of the pipes (354). A quench chamber (300) that used the baffle (310, 350) is also disclosed.

## Description

The invention relates generally to gasifiers, and more particularly to a quench chamber assembly for a gasifier and a baffle used therein.

In a normal coal gasification process, wherein a particulated carbonaceous fuel such as coal or coke or a carbonaceous gas is burned, the process is carried out at relatively hot temperatures and high pressures in a combustion chamber. When injected fuel is burned or partially burned in the combustion chamber, an effluent is discharged through a port at a lower end of the combustion chamber to a quench chamber disposed downstream of the combustion chamber. The quench chamber contains a liquid coolant such as water. The effluent from the combustion chamber is contacted with the liquid coolant in the quench chamber; so as to reduce the temperature of the effluent.

When the fuel is a solid such as coal or coke, the gasifier arrangement permits a solid portion of the effluent, in the form of ash, to be retained in the liquid pool of the quench chamber, and subsequently to be discharged as slag slurry. A gaseous component of the effluent is discharged from the quench chamber for further processing. The gaseous component, however, in passing through the quench chamber, will carry with it a substantial amount of the liquid coolant. A minimal amount of liquid entrained in the exiting gas is not considered objectionable to the overall process. However, excessive liquid carried from the quench chamber and into downstream equipment, is found to pose operational problems.

In conventional systems, a baffle may be placed in the gas exiting path in the quench chamber. Consequently, as liquid-carrying gas contacts the baffle surfaces, a certain amount of the liquid will coalesce on the baffle surfaces. However, the rapidly flowing gas will re-entrain liquid droplets by sweeping droplets from the baffle's lower edge. While various configurations of complicated baffles have been contemplated to aid in removing the entrained liquid from the effluent gas, consideration of manufacturing and assembly simplification becomes more important.

There is a need for an improved quench chamber assembly configured to cool an effluent gas from a combustion chamber and also a simplified but effective baffle designed to remove entrained liquid content substantially from the effluent gas in a gasifier.

In accordance with one exemplary embodiment of the present invention, a gasification quench chamber device comprises a ring having a substantially vertical longitudinal axis; a plurality of pipes attached to the ring, each having an upper end and a lower end, wherein the plurality of lower ends extend downwards towards a sump in the gasification quench chamber; and a plurality of gussets configured to guide water towards the upper ends of the plurality of pipes.

In accordance with another exemplary embodiment of the present invention, a gasification quench chamber comprises a chamber having a liquid coolant disposed therein; a dip tube coupling a combustion chamber to the chamber and configured to direct syngas from the combustion chamber to the chamber to contact the liquid coolant and thereby product a cooled syngas; and a baffle disposed proximate to an exit path of the chamber, wherein the baffle comprises: a ring having a substantially vertical longitudinal axis; a plurality of pipes attached to the ring, each having an upper end and a lower end, wherein the plurality of lower ends extend downwards towards the liquid coolant; and a plurality of gussets configured to guide water towards the upper ends of the plurality of pipes.

In accordance with another exemplary embodiment of the present invention, a gasification quench chamber comprises a chamber having a liquid coolant disposed therein; a dip tube coupling a combustion chamber to the chamber and configured to direct syngas from the combustion chamber to the chamber to contact the liquid coolant and thereby product a cooled syngas; a draft surrounding the dip tube and defining an annular passage there between; and a baffle disposed proximate to an exit path of the chamber, wherein the baffle comprises: a ring having a substantially vertical longitudinal axis; a plurality of pipes attached to the ring, each having an upper end and a lower end, wherein the plurality of lower ends extend downwards towards the liquid coolant; and a plurality of gussets configured to guide water towards the upper ends of the plurality of pipes.

In accordance with another gasification quench chamber device comprises a ring having a substantially vertical longitudinal axis; a plurality of extension plates attached to the ring, each having an upper end and a lower end, wherein the plurality of lower ends extend downward towards a sump in a gasification quench chamber; and a plurality of gussets configured to guide water towards the upper ends of the plurality of extension plates.

Various features, aspects, and advantages of the present invention will become better understood when the following detailed description is read with reference to the accompanying drawings in which like characters represent like parts throughout the drawings, wherein:
FIG. 1 is a diagrammatical representation of a gasifier having an exemplary quench chamber in accordance with an exemplary embodiment of the present invention;
FIG. 2 is a diagrammatical representation of a gasifier having an exemplary quench chamber with only dip tube in accordance with an exemplary embodiment of the present invention;
FIG. 3 is a diagrammatical representation of a portion of a quench chamber having an asymmetric or symmetric baffle and a deflector plate disposed therein in accordance with an exemplary embodiment of the present invention;
FIG. 4 is a diagrammatical representation of a portion of a quench chamber having an asymmetric or symmetric baffle with a curved end to form a gutter in accordance with an exemplary embodiment of the present invention;
FIG. 5 is a diagrammatical representation of a portion of a quench chamber having an asymmetric or symmetric baffle and a deflector plate disposed therein in accordance with an exemplary embodiment of the present invention;
FIG. 6 is a diagrammatical representation of a portion of a quench chamber having an asymmetric or symmetric baffle and a plurality of deflector plates disposed therein in accordance with an exemplary embodiment of the present invention;
FIG. 7 is a diagrammatical representation of a portion of a quench chamber having an asymmetric or symmetric baffle disposed therein in accordance with an exemplary embodiment of the present invention;
FIG. 8 is a diagrammatical representation of a portion of a quench chamber having an asymmetric or symmetric baffle and an annular passage having different cross-sectional areas disposed therein in accordance with an exemplary embodiment of the present invention;
FIG. 9 is a diagrammatical representation of a portion of a quench chamber having an asymmetric or symmetric baffle and an annular passage having different cross-sectional areas disposed therein in accordance with an exemplary embodiment of the present invention; and
FIG. 10 is a diagrammatical representation of a portion of a quench chamber having an asymmetric or symmetric baffle and a swirl generator disposed in an annular passage in accordance with an exemplary embodiment of the present invention;
FIG. 11 is a diagrammatical representation of a portion of a quench chamber having an asymmetric or symmetric baffle with a curved end, a swirl generator disposed in an annular passage, and a separator plate in accordance with an exemplary embodiment of the present invention;
FIG. 12 is a diagrammatical representation of a portion of a quench chamber having an asymmetric or symmetric baffle with a curved end to form a gutter and one or more openings coupled to a liquid guide pipe in accordance with an exemplary embodiment of the present invention;
FIG. 13 is a top view of a quench chamber in accordance with the embodiment illustrated in FIG. 12,
FIG. 14 is a cutaway perspective view of a baffle illustrated in FIG. 13;
FIG. 15 is a diagrammatical representation of a portion of a quench chamber having an asymmetric or symmetric baffle having a closed bottom portion and an opening disposed opposite to a gas exit path in accordance with an exemplary embodiment of the present invention;
FIG. 16 is a top view of a portion of a quench chamber illustrated in FIG. 15;
FIG. 17 is a diagrammatical representation of a portion of a quench chamber having an asymmetric faceted or round baffle having an opening disposed opposite to a gas exit path and having an extended edge to provide a torturous path in accordance with the exemplary embodiments of the present invention;
FIG. 18 is a diagrammatical representation of a portion of a quench chamber having a symmetric faceted or round baffle in accordance with the exemplary embodiments of the present invention;
FIG. 19 is a top view of a portion of a quench chamber illustrated in FIG. 18;
FIG. 20 is a diagrammatical representation of a portion of a quench chamber having an asymmetric or symmetric faceted or round baffle having a mesh structure to capture entrained liquid in accordance with an exemplary embodiment of the present invention;
FIG. 21 is a diagrammatical representation of a portion of a quench chamber having an asymmetric or symmetric faceted or round baffle having a plurality of cut-out portions, metal pieces or plates disposed overlapping the cut-out portions with spacers disposed in-between to provide a torturous path for syngas flow in accordance with an exemplary embodiment of the present invention;
FIG. 22 is a diagrammatical representation of an asymmetric or symmetric faceted or round baffle spiral "gussets" disposed to guide the entrained liquid content in accordance with an exemplary embodiment of the present invention;
FIG. 23 is a diagrammatical representation of a quench chamber employing a helical baffle in the annular passage between a dip tube and a draft tube in accordance with an exemplary embodiment of the present invention;
FIG. 24 is a diagrammatical representation of a quench chamber employing an asymmetric or symmetric baffle having an extended portion near exit in accordance with an exemplary embodiment of the present invention;
FIG. 25 is a cutaway perspective view of a baffle illustrated in FIG. 24;
FIG. 26 is cross sectional elevation view of a gasification quench chamber baffle, in accordance with an exemplary embodiment of the present invention;
FIG. 27 is sectional plan view of the gasification quench chamber baffle in FIG. 26, in accordance with an exemplary embodiment of the present invention;
FIG. 28 is cross sectional elevation view of a portion of a gasification quench chamber using the baffle in FIG. 26, in accordance with an exemplary embodiment of the present invention;
FIG. 29 is cross sectional elevation view of a gasification quench chamber baffle, in accordance with another exemplary embodiment of the present invention;
FIGS. 30A-30B are close up elevation views of a portion of a gasification quench chamber baffle, in accordance with exemplary embodiments of the present invention;
FIG. 31 is sectional plan view of the gasification quench chamber baffle in FIG. 29, in accordance with an exemplary embodiment of the present invention; and
FIG. 32 is cross sectional elevation view of a portion of a gasification quench chamber using the baffle in FIG. 29, in accordance with an exemplary embodiment of the present invention.

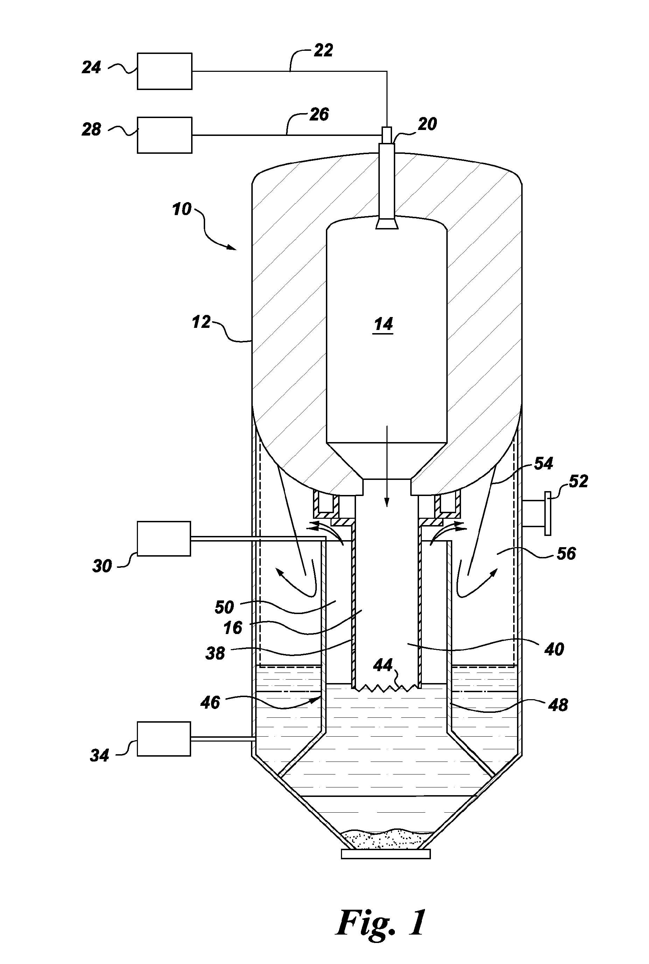

In accordance with various exemplary embodiments disclosed herein, a gasifier having a quench chamber assembly configured to reduce temperature of syngas downstream of a combustion chamber is disclosed. The gasifier includes a quench chamber containing a liquid coolant disposed downstream of the combustion chamber. A syngas generated from the combustion chamber is directed via a dip tube to the quench chamber to contact the liquid coolant and produce a cooled syngas. A baffle is disposed proximate to an exit path of the quench chamber. The baffle may be a symmetric or asymmetric shaped baffle. A draft tube is disposed surrounding the dip tube such that an annular passage is formed between the draft tube and the dip tube. The cooled syngas is directed through the annular passage and impacted against the baffle so as to remove entrained liquid content from the cooled syngas before the cooled syngas is directed through the exit path. In some embodiments, a deflector plate is disposed between the liquid coolant and the exit path of the quench chamber and configured to remove entrained liquid content from the cooled syngas and prevent sloshing of liquid content to the exit path. In yet another embodiment, a swirl generator is disposed in the annular passage between the dip tube and the draft tube and configured to induce a swirling motion to the cooled syngas directed through the annular passage. In some embodiments embodiments, the baffle is asymmetric or symmetric, either open or angular, to remove entrained liquid content from the cooled syngas. In other embodiments, the baffle itself can have channels or cut-outs and overlays to remove entrained liquid and prevent sloshing of liquid content to the exit path. In other embodiments only dip tube is present and the annular section is formed between the dip tube and the quench chamber wall. The provision of asymmetric or symmetric shaped baffle, deflector plate, swirl generator, or combinations thereof substantially reduces entrainment of liquid content in the syngas directed through the exit path to the downstream components. Specific embodiments are discussed in greater detail below with reference to FIGS. 1-32.

Referring to FIG. 1, an exemplary gasifier 10 is disclosed. The gasifier 10 includes an outer shell 12 housing a combustion chamber 14 at an upper end and a quench chamber 16 at a lower end. Combustion chamber 14 is provided with a refractory wall 18 capable of withstanding the normal operating temperatures. A burner 20 is coupled via a path 22 to a fuel source 24. A fuel stream including pulverized carbonaceous fuel such as coal, coke or the like, is fed into the combustion chamber 12 via the burner 20 removably disposed on an upper wall of the combustion chamber 14. The burner 20 is further coupled via a path 26 to a combustion supporting gas source 28 configured to supply gas such as oxygen or air.

The combustible fuel is burned in the combustion chamber 14 to produce an effluent including syngas and a particulated solid residue. Hot effluent is fed from the combustion chamber 14 to the quench chamber 16 provided at the lower end of the shell 12. The quench chamber 16 is coupled to a pressurized source 30 and configured to supply a pool of liquid coolant 32, preferably water to the quench chamber 16. The level of the liquid coolant in the quench chamber pool 16 is maintained at a desired height to assure an efficient operation depending on the conditions of the effluent fed from the combustion chamber 14 into the quench chamber 16. The lower end of the gasifier shell 12 is provided with a discharge port 34 through which water and fine particulates are removed from quench chamber 16 in the form of a slurry.

In the illustrated embodiment, a constricted portion 36 of the combustion chamber 14 is coupled to the quench chamber 16 via a dip tube 38. The hot effluent is fed from the combustion chamber 14 to the liquid coolant 32 in the quench chamber 16 via a passageway 40 of the dip tube 38. A quench ring 42 is disposed proximate to the dip tube 38 and coupled to the pressurized source 30 so as to sustain a dip tube inner wall in a wetted condition to best accommodate the downward effluent flow. A lower end 44 of the dip tube 38 may be serrated, and positioned below the surface of the liquid coolant 32 to efficiently achieve cooling of the effluent.

A draft tube 46 is positioned in the quench chamber 16. The draft tube 46 includes an elongated cylindrical body 48 fixedly supported in the gasifier shell 12. A lower portion of the draft tube 46 is submerged in the liquid coolant 32. The cylindrical body 48 terminates adjacent to, but spaced at its upper end, from the quench ring 42. The cylindrical body 48 is also spaced from the dip tube 38 to define an annular passage 50. The syngas is contacted with the liquid coolant 32 to produce a cooled syngas. The cooled syngas is then passed through the annular passage 50 towards an exit path 52 of the quench chamber 16.

As discussed above, the gaseous component of the effluent is discharged for further processing via the exit path 52 from the quench chamber 16. It is known conventionally that the gaseous component, however, in passing through a quench chamber, will carry with it a substantial amount of the liquid coolant. Excessive liquid carried from the quench chamber and into downstream equipment, is found to pose operational problems. In the illustrated exemplary embodiment, an asymmetric or symmetric shaped baffle 54 is disposed proximate to the exit path 52 in the quench chamber 16. The baffle 54 extends a distance below an upper edge of the draft tube 46, but above the surface of liquid coolant 32. The cooled syngas directed through the annular passage 50 is impacted against an inner wall of the baffle 54. In the normal course of quench cooling, the cooled gas stream would convey with it a certain amount of liquid coolant. However, as the cooled gas stream impinges against the inner surface of baffle 54, the entrained liquid content in the gas stream will tend to coalesce on the inner surface of the baffle 54. The gas stream after impacting the baffle 54 reverses direction and then moves along a path 56 into the exit path 52. It should be noted herein that the illustrated gasifier is an exemplary embodiment and other configurations of gasifiers are also envisaged. For example, in some embodiments, the exemplary quench chamber 16 may be disposed beneath a radiant syngas cooler configured to partially reduce the syngas temperature before syngas enters the quench chamber. The details of the quench chamber 16 are discussed in greater detail below with reference to subsequent figures.

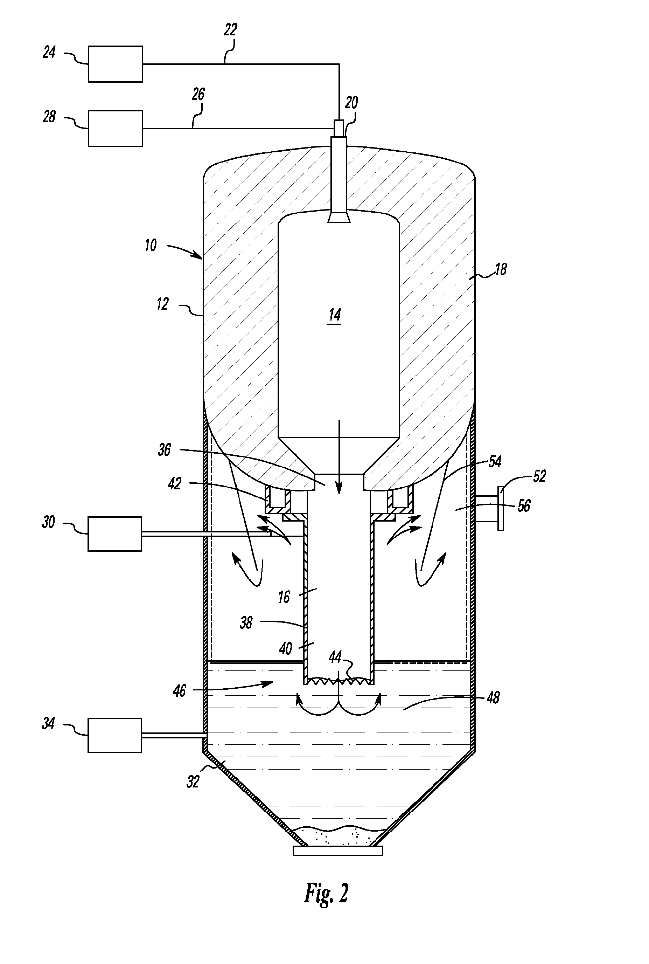

Referring to FIG. 2, an exemplary gasifier 10 is disclosed. The gasifier 10 is similar to the embodiment illustrated in FIG. 1. As discussed above, the hot effluent is fed from the combustion chamber 14 to the liquid coolant 32 in the quench chamber 16 via the passageway 40 of the dip tube 38. The lower end 44 of the dip tube 38 may be serrated, and positioned below the surface of the liquid coolant 32 to efficiently achieve cooling of the effluent. It should be noted herein that in the illustrated embodiment, there is no draft tube. The syngas is contacted with the liquid coolant 32 to produce a cooled syngas. The cooled syngas is impacted against an inner wall of the baffle 54. As the cooled gas stream impinges against the inner surface of baffle 54, the entrained liquid content in the gas stream will tend to coalesce on the inner surface of the baffle 54. The cooled syngas is then passed towards the exit path 52 of the quench chamber 16.

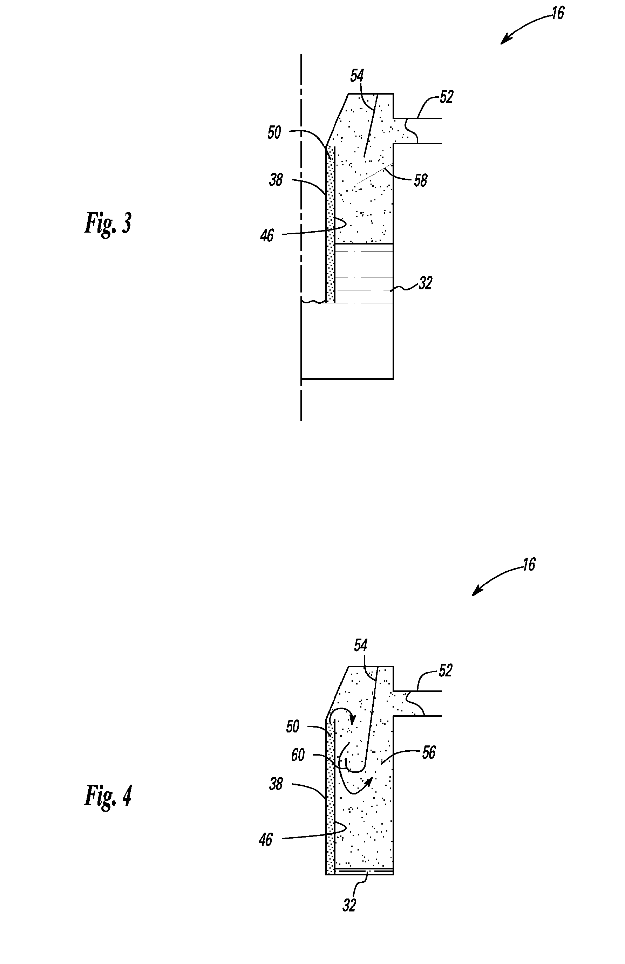

Referring to FIG. 3, a portion of the quench chamber 16 is disclosed. As discussed above, the draft tube 46 is positioned surrounding the dip tube 38 in the quench chamber 16. The syngas is contacted with the liquid coolant 32 to produce a cooled syngas. The cooled syngas is then passed through the annular passage 50 between the dip tube 38 and the draft tube 46 towards the exit path 52 of the quench chamber 16. In addition to the asymmetric or symmetric shaped baffle 54, a deflector plate 58 is also disposed between the liquid coolant 32 and the exit path 52. It should be noted herein that the deflector plate 58 may be disposed at a predetermined angle with respect to the liquid coolant 32.

Also as discussed previously, the cooled syngas directed through the annular passage 50 is impacted against an inner wall of the baffle 54. As the cooled gas stream impinges against the inner surface of baffle 54, the entrained liquid content in the gas stream will tend to coalesce on the inner surface of the baffle 54. In the illustrated embodiment, in addition to the asymmetric or symmetric baffle 54, the cooled syngas is also impacted against the deflector plate 58 so as to remove additional entrained liquid coolant content from the cooled syngas before being directed through the exit path. In other words, the deflector plate 58 provides an additional barrier for removing entrained liquid content from the cooled syngas fed from the quench chamber 16. Also, the deflector plate 58 prevents sloshing of liquid coolant 32 to the exit path 52 of the quench chamber 16.

Referring to FIG. 4, a portion of the quench chamber 16 is disclosed. In the illustrated embodiment, the baffle 54 is disposed proximate to the exit path 52 in the quench chamber 16. The baffle 54 extends a distance below an upper edge of the draft tube 46, but above the surface of liquid coolant 32. As noted above, the cooled syngas directed through the annular passage 50 is impacted against an inner wall of the baffle 54. It should be noted herein that in the illustrated embodiment, the baffle 54 is an asymmetric shaped baffle. In another embodiment, the baffle 54 may be a symmetric baffle. In the illustrated embodiment, the asymmetric baffle 54 includes a curved end portion 60 pointed towards the liquid coolant 32. As the cooled gas stream impinges against the inner surface of the baffle 54, the entrained liquid content in the gas stream will tend to coalesce on the inner surface of the baffle 54. The gas stream after impacting the baffle 54 reverses direction and then moves along a path 56 into the exit path 52. The asymmetric shape of the baffle 54 prevents the rapidly flowing gas from re-entrain liquid droplets by sweeping droplets from a baffle's lower edge.

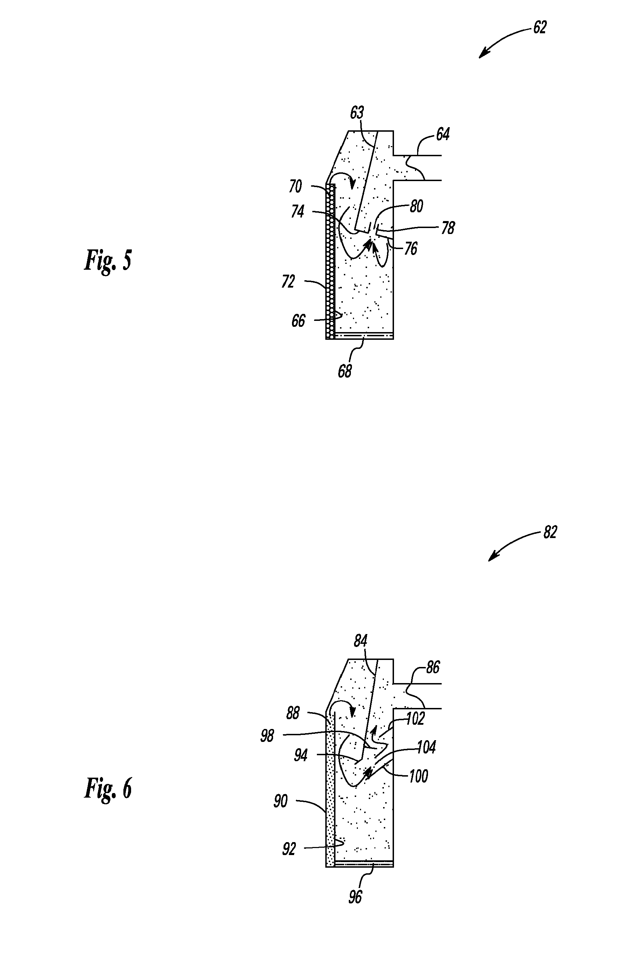

Referring to FIG. 5, a portion of a quench chamber 62 is disclosed. In the illustrated embodiment, a baffle 63 is disposed proximate to an exit path 64 in the quench chamber 62. In the illustrated embodiment, the baffle 63 is an asymmetric baffle. In another embodiment, the baffle 63 is a symmetric baffle. The baffle 63 extends a distance below an upper edge of a draft tube 66, but above the surface of a liquid coolant 68. As noted above, the cooled syngas directed through an annular passage 70 formed between a dip tube 72 and the draft tube 66 is impacted against an inner wall of the baffle 63. In the illustrated embodiment, the baffle 63 includes a deflected end portion 74 pointed towards the liquid coolant 68. As the cooled gas stream impinges against an inner surface of the baffle 63, the entrained liquid content in the gas stream will tend to coalesce on the inner surface of the baffle 63.

In addition to the baffle 63, a deflector plate 76 is also disposed between the liquid coolant 68 and the exit path 64. It should be noted herein that the deflector plate 76 is disposed at a predetermined angle pointed away from the liquid coolant 68. In the illustrated embodiment, the deflector plate 76 is an asymmetric or symmetric shaped deflector plate having a deflected end portion 78. In addition to the baffle 63, the cooled syngas is also impacted against the deflector plate 76 so as to remove additional entrained liquid coolant content from the cooled syngas. Also, the deflector plate 76 prevents sloshing of liquid coolant 68 to the exit path 64 of the quench chamber 62. The cooled syngas after impacting the baffle 63 and the deflector plate 76 is then directed through a gap 80 between the deflected end portions 74, 78 to the exit path 64 of the quench chamber 62.

Referring to FIG. 6, a portion of a quench chamber 82 is disclosed. In the illustrated embodiment, a baffle 84 is disposed proximate to an exit path 86 in the quench chamber 82. In the illustrated embodiment, the baffle 84 is an asymmetric baffle. In another embodiment, the baffle 84 may be a symmetric baffle. The cooled syngas is directed through an annular passage 88 formed between a dip tube 90 and a draft tube 92 and impacted against an inner wall of the baffle 84. In the illustrated embodiment, the baffle 84 includes a deflected end portion 94 pointed towards a liquid coolant 96 contained in the quench chamber 82. The baffle 84 may also include at least one gusset 98. As the cooled gas stream impinges against an inner surface of the baffle 84, the entrained liquid content in the gas stream will tend to coalesce on the inner surface of the baffle 84. The gusset 98 facilitates to drain the liquid coolant collected on the surface of the baffle 84.

In the illustrated embodiment, a plurality of deflector plates 100, 102 are disposed between the liquid coolant 96 and the exit path 86. It should be noted herein that the deflector plates 100, 102 are disposed at a predetermined angle pointing towards the liquid coolant 96. The cooled syngas is impacted against the baffle 84 and the deflector plates 100, 102 so as to remove additional entrained liquid coolant content from the cooled syngas. The deflector plates 100, 102 prevent sloshing of liquid coolant 96 to the exit path 86 of the quench chamber 82. The cooled syngas is impacted against the baffle 84 and the deflector plates 100, 102 and then directed through a gap 104 between the baffle 84 and the deflector plates 100, 102 to the exit path 86 of the quench chamber 82.

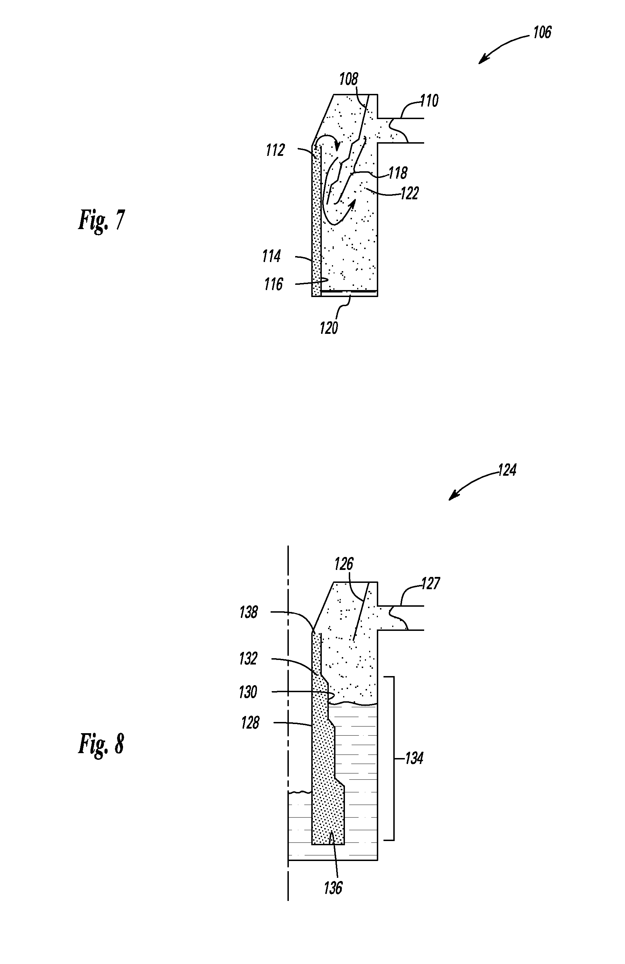

Referring to FIG. 7, a portion of a quench chamber 106 is disclosed. In the illustrated embodiment, a baffle 108 is disposed proximate to an exit path 110 in the quench chamber 106. In the illustrated embodiment, the baffle 108 is an asymmetric baffle. In another embodiment, the baffle 108 is a symmetric baffle. The cooled syngas is directed through an annular passage 112 formed between a dip tube 114 and a draft tube 116 and impacted against an inner wall of the baffle 108. In the illustrated embodiment, the baffle 108 includes a stepped portion 118 pointed towards a liquid coolant 120 contained in the quench chamber 106. As the cooled gas stream impinges against an inner surface of the baffle 108, the entrained liquid content in the gas stream will tend to coalesce on the inner surface of the baffle 108. The cooled syngas after impacting the baffle 108 is then redirected through a path 122 to the exit path 110 of the quench chamber 106.

In accordance with the embodiments discussed herein, the provision of the baffle, deflector plate, or combinations there of facilitates to reduce cooled syngas flow velocity, and also to increase gas flow path distance between the liquid coolant and the exit path of the quench chamber. This results in increased residence time of the gas and liquid coolant mixture in the quench chamber leading to enhanced removal of entrained liquid content from the cooled syngas.

Referring to FIG. 8, a portion of a quench chamber 124 is disclosed. In the illustrated embodiment, baffle 126 is disposed proximate to an exit path 127 in the quench chamber 124. The baffle 126 may be a symmetric or an asymmetric baffle. As noted in the previous embodiments, hot effluent is directed from a combustion chamber to the quench chamber 124 via a dip tube 128. A draft tube 130 is disposed surrounding the dip tube 128 such that an annular passage 132 is formed between the dip tube 128 and the draft tube 130. The cooled syngas is directed through an annular passage 132 formed between the dip tube 128 and the draft tube 130 and impacted against an inner wall of the baffle 126 so as to remove additional entrained liquid coolant content from the cooled syngas.

In the illustrated embodiment the draft tube 130 includes a stepped portion 134. In other words, the annular passage 132 formed between the dip tube 128 and the draft tube 130 has different cross-sectional areas. The cross-sectional area of the annular passage 132 increases from one end 136 to another end 138. This reduces any plugging at the end 136.

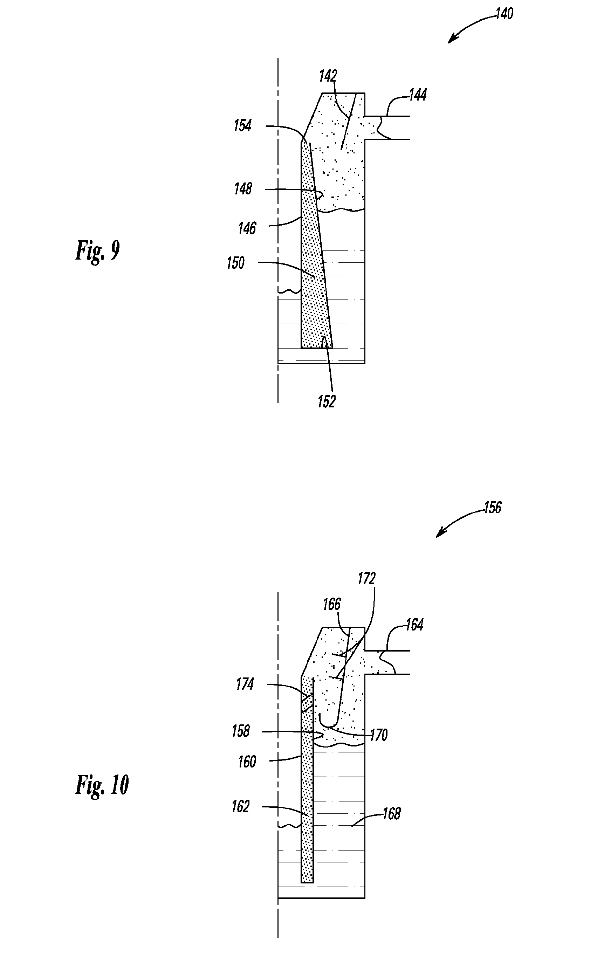

Referring to FIG. 9, a portion of a quench chamber 140 is disclosed. In the illustrated embodiment, a baffle 142 is disposed proximate to an exit path 144 in the quench chamber 140. The baffle 142 may be a symmetric or an asymmetric baffle. As noted in the previous embodiments, hot effluent is directed from a combustion chamber to the quench chamber 140 via a dip tube 146. A draft tube 148 is disposed surrounding the dip tube 146 such that an annular passage 150 is formed between the dip tube 146 and the draft tube 148. The cooled syngas is directed through an annular passage 150 formed between the dip tube 146 and the draft tube 148 and impacted against an inner wall of the baffle 142 so as to remove additional entrained liquid coolant content from the cooled syngas.

In the illustrated embodiment the draft tube 148 has varying cross-sectional area. In other words, the annular passage 150 formed between the dip tube 146 and the draft tube 148 has different cross-sectional areas. The cross-sectional area of the annular passage 150 increases from one end 152 to another end 154.

In accordance with the embodiments discussed with reference to FIGS. 8-9, an annular passage having different cross-sectional areas facilitate to reduce syngas speed fed through the annular passage. In addition, this also increases the cross-sectional area between the draft tube 148 and the quench vessel inner wall. This results in enhanced removal of entrained liquid content from the cooled syngas.

Referring to FIG. 10, a portion of a quench chamber 156 is disclosed. In the illustrated embodiment, a draft tube 158 is positioned surrounding a dip tube 160 in the quench chamber 156. The cooled syngas is passed through the annular passage 162 formed between the dip tube 160 and the draft tube 158 towards an exit path 164 of the quench chamber 156. A baffle 166 is disposed proximate to the exit path 164 in the quench chamber 156. In the illustrated embodiment, the baffle 166 is an asymmetric baffle. In another embodiment, the baffle 166 is a symmetric baffle. The baffle 166 extends a distance below an upper edge of the draft tube 158, but above the surface of liquid coolant 168 filled in the quench chamber 156. The baffle 166 includes a curved end portion 170, and a plurality of gussets 172. An inner surface of the baffle may be made sticky.

The cooled syngas is directed through the annular passage 162 and impacted against an inner wall of the baffle 166. In the illustrated embodiment, a rotary device, for example a swirl generator 174 is disposed in the annular passage 162 and configured to induce swirling motion to the cooled syngas passed through the annular passage 162. As the cooled gas stream impinges against the inner surface of baffle 166, the imparted swirling motion facilitates the entrained liquid content in the gas stream to coalesce on the inner surface of the baffle 166. In other words, the swirling motion imparts higher centrifugal force and thus generates higher droplet diameter of the entrained liquid. The gussets 172 of the baffle 166 facilitate to drain the liquid content removed by the baffle 166.

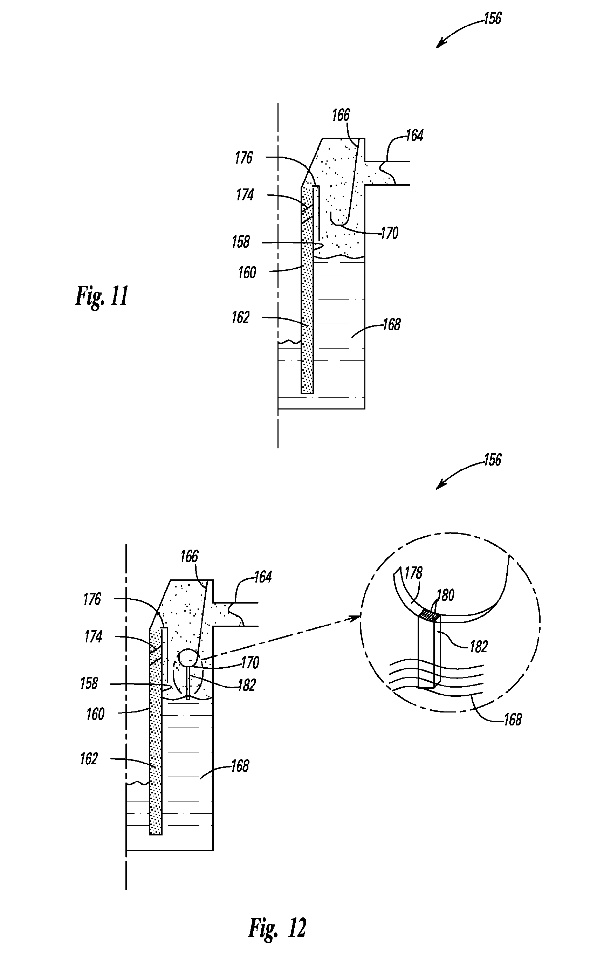

Referring to FIG. 11, a portion of the quench chamber 156 is disclosed. This embodiment is similar to the embodiment illustrated in FIG. 10. Additionally, a separator plate 176 is disposed between the draft tube 158 and the baffle 166. The swirl generator 174 is disposed in the annular passage 162 and configured to induce swirling motion to the cooled syngas passed through the annular passage 162. This results in forming a entrained liquid film on an inner wall of the draft tube 158 and the resulting liquid film is directed downward using the separator plate 176.

Referring to FIG. 12, a portion of the quench chamber 156 is disclosed. This embodiment is similar to the embodiment illustrated in FIG.10. The baffle 166 includes the curved end portion 170 having a slope portion 178 and a plurality of holes 180 to provide an exit path for entrained liquid content collected on the curved end portion 170. The collected liquid content drained through the holes 180 is guided downwards through a guide pipe 182 coupled the curved end portion 170. An end of the water guide pipe 182 may be partially dipped in the liquid coolant in the quench chamber 156.

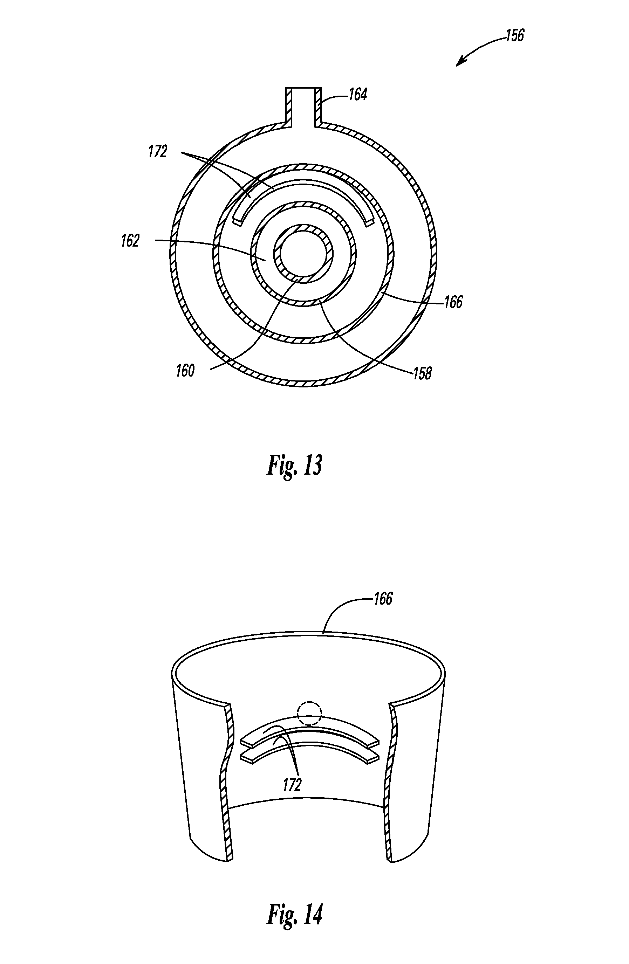

Referring to FIG. 13, a portion of the quench chamber 156 is disclosed. This embodiment is similar to the embodiment illustrated in FIG. 12. The baffle 166 includes the plurality of gussets 172 disposed proximate to the exit path 164. One or more gussets 172 may be disposed on an inner circumference of the baffle 166. The gussets 172 may be circumferentially aligned with the exit path 166 and may have a curvature extending along a portion of the inner circumference of the baffle 166. According to certain embodiments, the gussets 172 may extend approximately along one third of the inner circumference of the baffle 166. Specifically, the gussets 172 may be designed to contact the increased velocity syngas and direct flow of entrained liquid content collected on the baffle 166 away from the exit path 164. For example, the gussets 172 may impede droplets of the liquid content from becoming entrained in the higher velocity syngas directed towards the exit path 164. The gussets 172 may also promote coalescence of the entrained liquid content.

Referring to FIG. 14, a portion of the baffle 166 is disclosed. As discussed previously, one or more gussets 172 may be disposed on the inner circumference of the baffle 166. According to certain embodiments, the gussets 172 may extend approximately along one third of the inner circumference of the baffle 166. In the illustrated embodiment, the gussets 172 may be angled downward in the quench chamber to direct the entrained liquid content away from the exit path of the quench chamber.

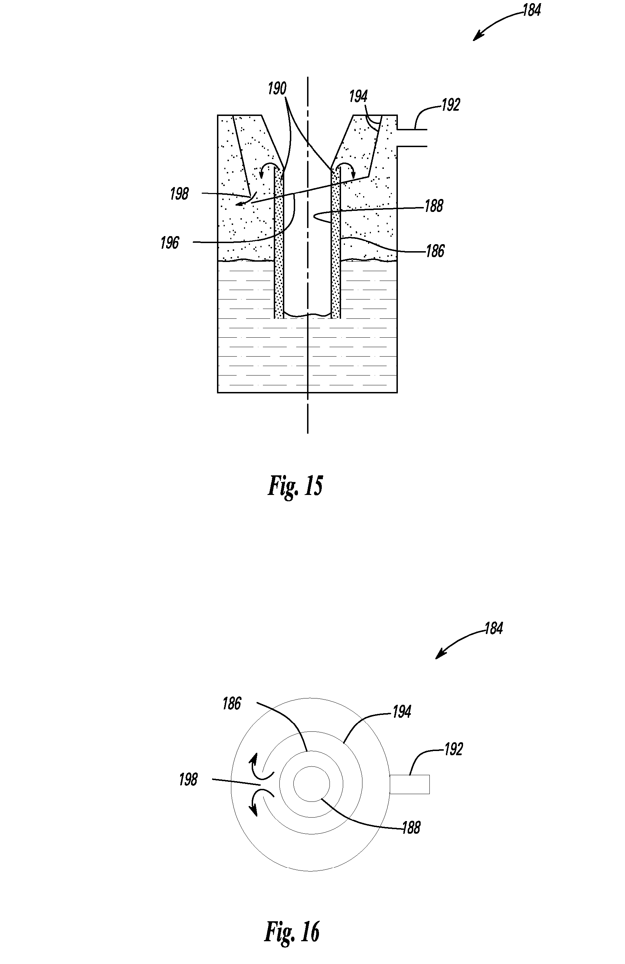

Referring to FIG. 15, a quench chamber 184 is disclosed. In the illustrated embodiment, a draft tube 186 is positioned surrounding a dip tube 188 in the quench chamber 184. The cooled syngas is passed through the annular passage 190 formed between the dip tube 188 and the draft tube 186 towards an exit path 192 of the quench chamber 184. A faceted or round baffle 194 is disposed proximate to the exit path 192 in the quench chamber 184. In one embodiment, the baffle 194 is an asymmetric baffle. In another embodiment, the baffle 194 is a symmetric baffle. A bottom 196 of the baffle 194 is closed such that an area between the baffle bottom 196 and draft tube 186 is blocked using an annular plate. The baffle 194 has an opening 198 disposed opposite to the exit path 192 such that the syngas flows along a torturous path.

Referring to FIG. 16, a top view of the quench chamber 184 is illustrated. As discussed previously, the baffle 194 is disposed proximate to the exit path 192 in the quench chamber 184. The baffle 194 has an opening 198 disposed opposite to the exit path 192 such that the syngas flows along a torturous path.

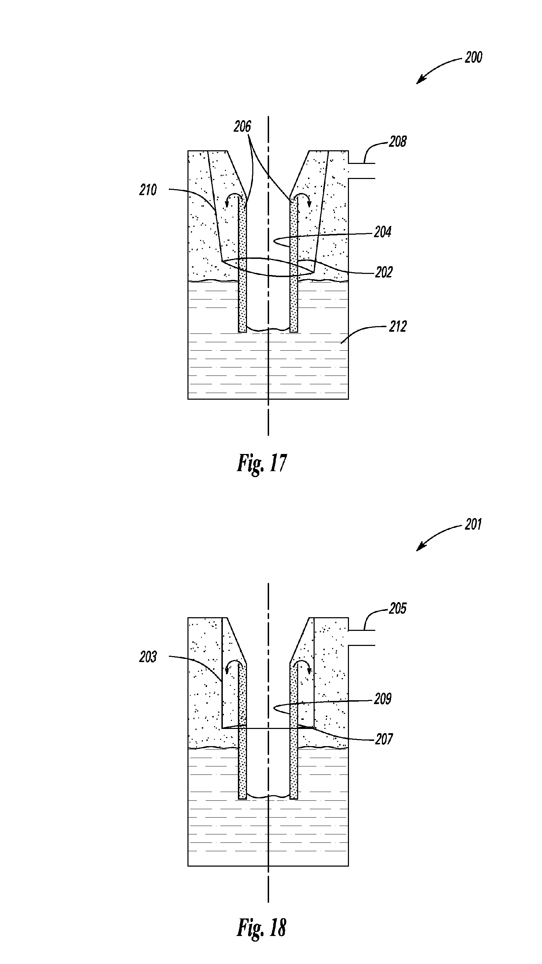

Referring to FIG. 17, a quench chamber 200 is disclosed. In the illustrated embodiment, a draft tube 202 is positioned surrounding a dip tube 204 in the quench chamber 200. The cooled syngas is passed through the annular passage 206 formed between the dip tube 204 and the draft tube 202 towards an exit path 208 of the quench chamber 200. A faceted or round baffle 210 is disposed proximate to the exit path 208 and surrounding the dip tube 204 and the draft tube 202 in the quench chamber 200. The syngas is cooled by contacting a liquid coolant 212 in the quench chamber 200.

Referring to FIG. 18, a quench chamber 201 is disclosed. In the illustrated embodiment, a symmetric baffle 203 is disposed proximate to an exit path 205 and surrounding a dip tube 207 and a draft tube 209 in the quench chamber 201.

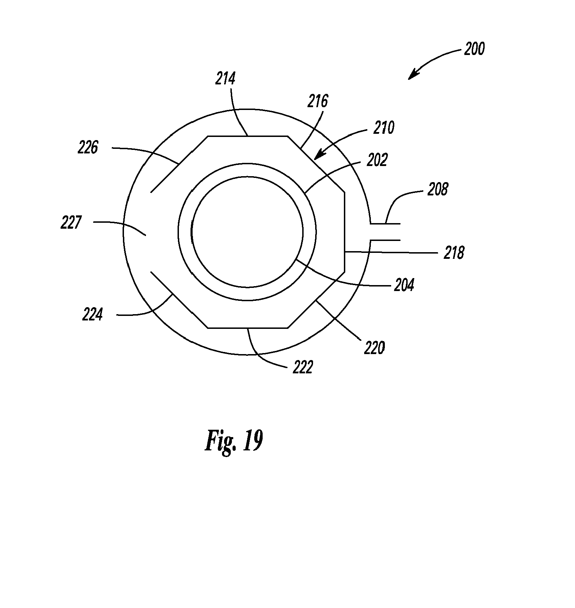

Referring to FIG. 19, a quench chamber 200 is disclosed. This embodiment is same as the embodiment illustrated in FIG. 17. In the illustrated embodiment, the draft tube 202 is positioned surrounding the dip tube 204 in the quench chamber 200. The cooled syngas is passed through the annular passage 206 formed between the dip tube 204 and the draft tube 202 towards the exit path 208 of the quench chamber 200. A baffle 210 is disposed proximate to the exit path 208 and surrounding the dip tube 204 and the draft tube 202 in the quench chamber 200. In the illustrated embodiment, the baffle 210 is a faceted baffle. The illustrated baffle 210 includes a plurality of splash plates 214, 216, 218, 220, 222, 224, 226. The baffle 210 has an opening 227 opposite to the exit path 208. In another embodiment, the plates 224 and 226 may also be removed so that the baffle 210 has a larger opening that will further decrease the syngas flow velocity and facilitate removal of entrained liquid content from the syngas. The baffle 210 has a shorter edge opposite to the exit path 208. A side of the baffle proximate to the exit path 208 extends down towards a liquid coolant 212 to provide a tortuous path for the flow of syngas. This forces the syngas to flow towards the opening of the baffle 210 at the opposite end where a very large area exists that will decrease the syngas flow velocity and facilitate removal of entrained liquid content from the syngas. It should be noted herein that the baffle 210 is angled up toward the opposite end of the exit path 208 to facilitate for pressure relief.

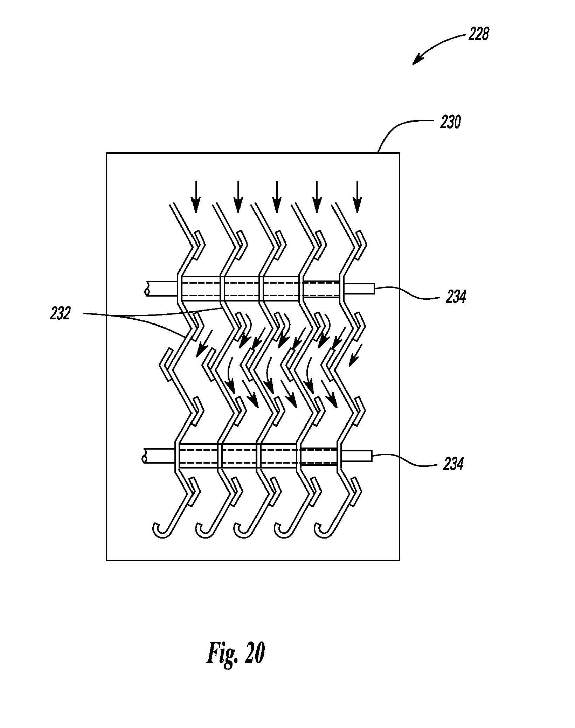

Referring to FIG. 20, a faceted baffle 228 is disclosed. In the illustrated embodiment, the faceted baffle 228 includes a chevron type mesh 230 instead of the splash plates illustrated in FIG. 19. The chevron mesh 230 includes a plurality of drainage traps 232 supported by bolts 234. The chevron mesh 230 allows passage of syngas and removes the entrained liquid content from the syngas. In an alternate embodiment, a portion of the plates 214, 216, 218, 220, 222, 224, 226 of the baffle 210 illustrated in FIG. 19 may be partially replaced by the chevron mesh 230.

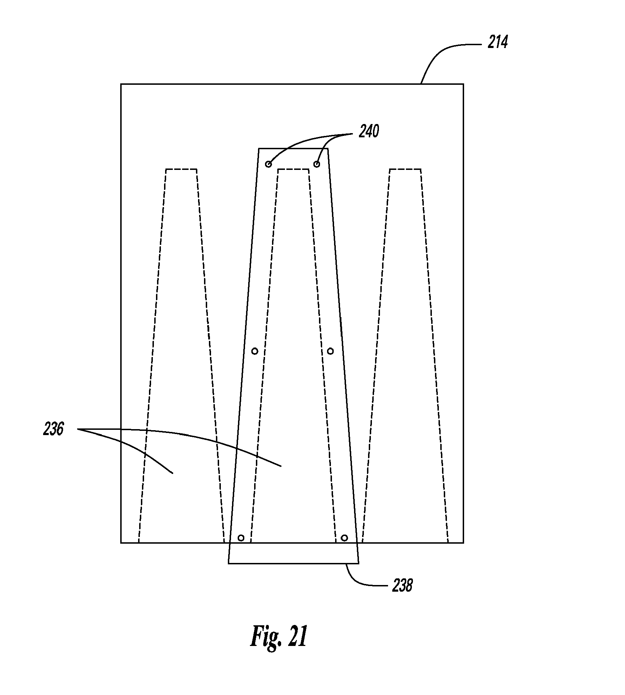

Referring to FIG. 21, one of the splash plate 214 of the baffle 210 is illustrated. In the illustrated embodiment, a plurality of vertical strips portions are removed from the splash plate 214 to form corresponding cut-out portions 236. A metal piece 238 that is slightly larger in height and width of the cut-out portion 236 is then placed overlapping of each cut-out portion 236. The metal pieces 238 are attached to the splash plate 214 with spacers 240 disposed in-between to allow torturous path for gas flow through the cut-out portions 236 of the plate 214.

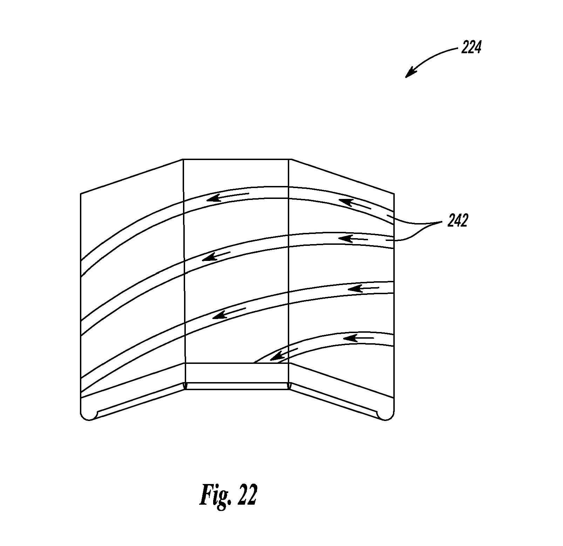

Referring to FIG. 22, one of the splash plate 224 is illustrated. In the illustrated embodiment, a plurality of channels or gussets 242 are provided on an inner face of the splash plate 224. The gussets 242 are angled to allow entrained liquid content to flow down the splash plate 224 to the gutters of the baffle.

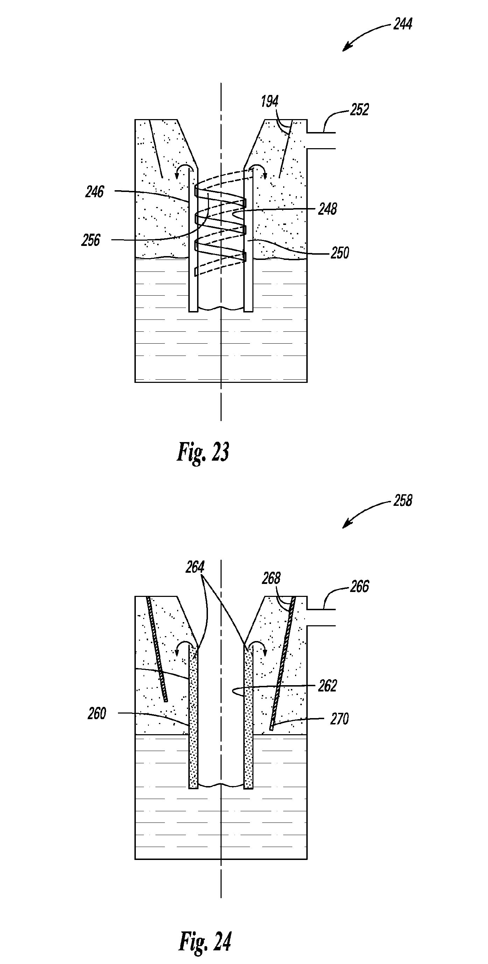

Referring to FIG. 23, a quench chamber 244 is disclosed. In the illustrated embodiment, a draft tube 246 is positioned surrounding a dip tube 248 in the quench chamber 244. The cooled syngas is passed through an annular passage 250 formed between the dip tube 248 and the draft tube 246 towards an exit path 252 of the quench chamber 244. A baffle 254 is disposed proximate to the exit path 252 in the quench chamber 244. The baffle 254 may be a symmetric baffle or an asymmetric baffle. Additionally, a helical baffle 256 is disposed in the annular passage 250 and may be designed to induce a spiraled or rotational flow pattern of the syngas through the annular passage 250. The rotational flow may increase flow path of the syngas in the quench chamber 244, which in turn may increase the pressure drop to reduce fluid flow fluctuations. Furthermore, the baffle 256 may promote a spiraled flow that may reduce entrainment of water and ash within the syngas. Moreover, the extended flow path of the syngas in the quench chamber 244 may enhance the heat transfer rate. In general, the helical baffle 256 may create a tortuous path for the flow of syngas within the quench chamber 244.

Referring to FIG. 24, a quench chamber 258 is disclosed. In the illustrated embodiment, a draft tube 260 is positioned surrounding a dip tube 262 in the quench chamber 258. The cooled syngas is passed through an annular passage 264 formed between the dip tube 262 and the draft tube 260 towards an exit path 266 of the quench chamber 258. A baffle 268 is disposed proximate to the exit path 266 in the quench chamber 258. The baffle 268 may be a symmetric baffle or an asymmetric baffle. In the illustrated embodiment, the baffle 268 includes an extended portion 270 which may be angled to divert the entrained liquid content away from a lip of the baffles 268 thereby reducing entrainment of liquid content in the exiting syngas.

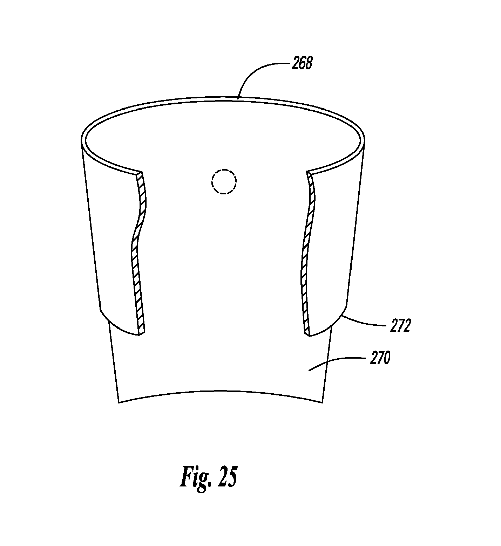

Referring to FIG. 25, the baffle 268 is illustrated. As discussed previously, the baffle 268 is disposed proximate to the exit path in the quench chamber. In the illustrated embodiment, the baffle 268 includes an extended portion 270 that may extend along approximately one third of an inner circumference 272 of the baffle 268. Moreover, in certain embodiments, the extended portion 146 may include a gutter portion to divert entrained liquid content away from a lower lip of the extended portion 146.

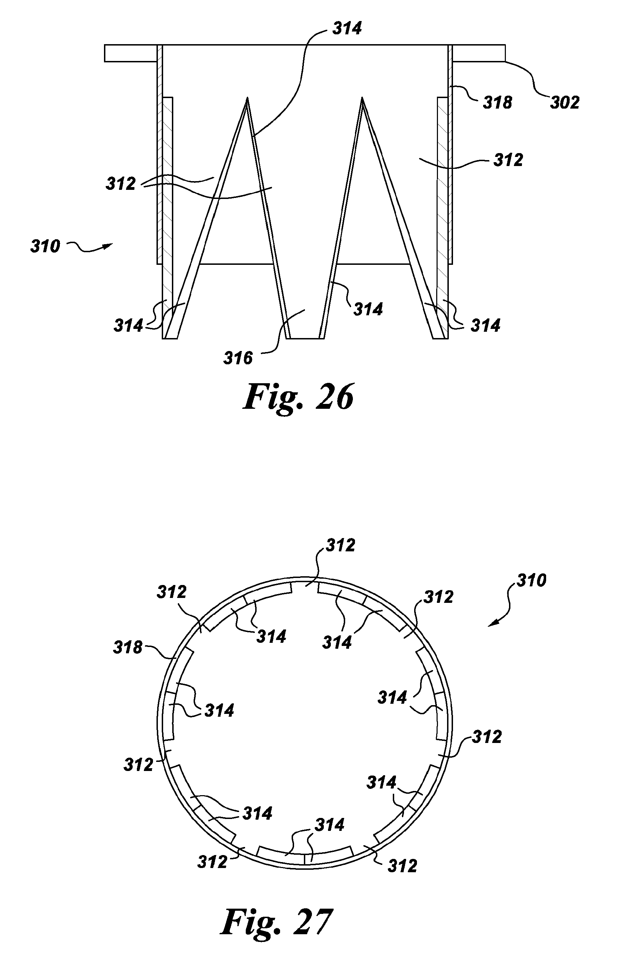

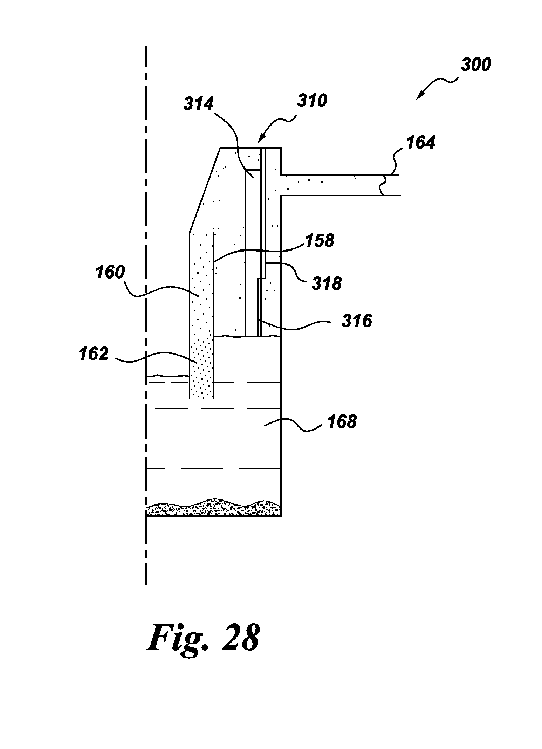

Referring to FIGS. 26 and 27, a sectional side view and top view respectively of a gasification quench chamber baffle in accordance with aspects of the present invention is disclosed. The gasification quench chamber baffle, or baffle 310 includes a ring 318 that has a substantially vertical longitudinal axis. The ring 318 has a plurality of extensions 316 extending downward from the ring 318. Extending to the plurality of extensions 316 is a plurality of gussets or gussets plates 314. As shown in FIG. 26, the plurality of gussets 314 have a sloped configuration to aid in guiding water towards the plurality of extensions 316 and to the liquid coolant in the quench chamber 300 (FIG. 28). At or near an upper end of the baffle 310 may be a structural or attachment element 302 configured to aid in the attachment of the baffle 310 to the quench chamber 300.

Referring to FIG. 28, a portion of a quench chamber 300 is disclosed. This embodiment is similar in some aspects to the embodiment illustrated in FIG. 12. The baffle 310 includes at least one of the plurality of gussets 314 and the plurality of extensions 315 configured to provide an exit path for entrained liquid content collected on the side surface 312 of the baffle 310. The collected liquid content is guided downwards along the gussets 314 towards the extensions 316. An end of the extensions 316 and/or gussets 314 may be partially dipped in the liquid coolant 168 in the quench chamber 300. Note that although the outside periphery (e.g., ring 318 and gussets 314) of the baffle 310 is depicted as vertical, other configurations are possible under aspects of the present invention. For example, the outside of the baffle 310 may be canted slightly inward towards its lower end, so that the axis of the ring 318 and gussets may be, for example, 5 degrees from vertical. Other angles are possible without departing from aspects of the invention. This angulation may further aid in effectively gathering moisture with the baffle 310 so to direct it to the quench chamber sump.

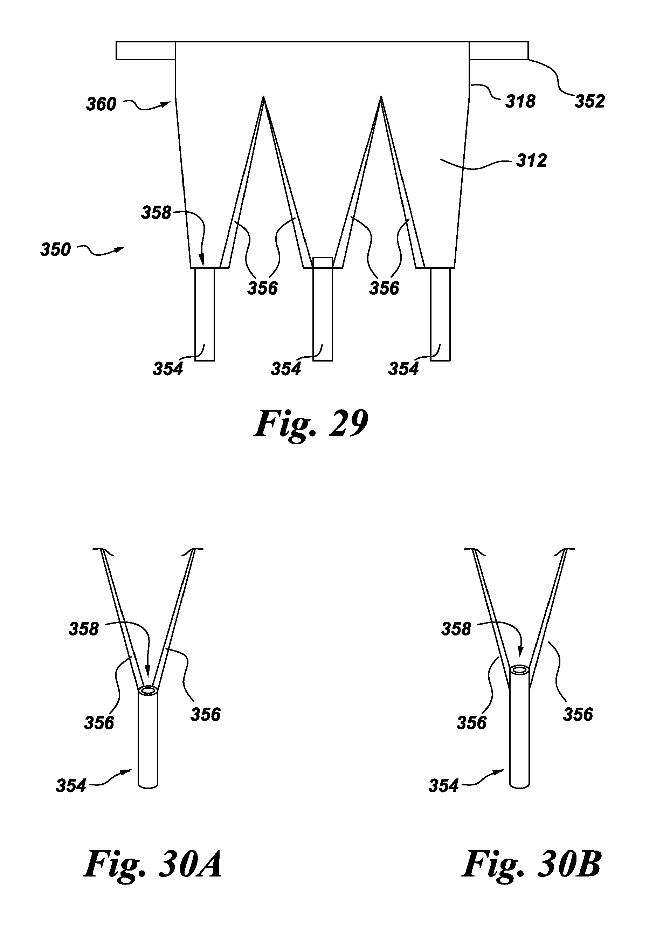

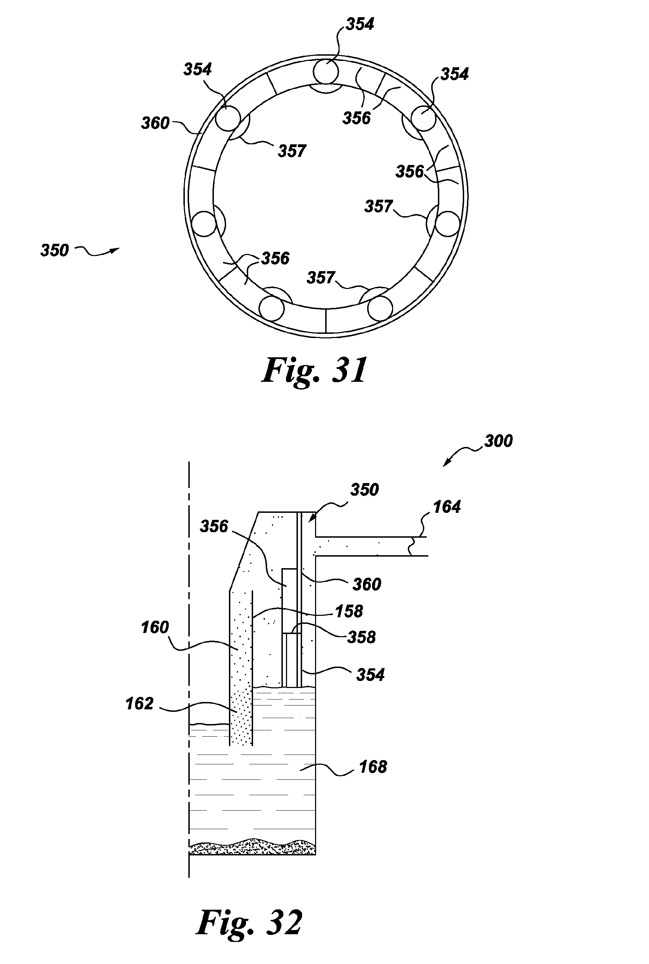

Referring to FIGS. 29 and 31, a sectional side view and top view respectively of a gasification quench chamber baffle in accordance with aspects of another embodiment of the present invention is disclosed. The gasification quench chamber baffle, or baffle 350 includes a ring 360 that has a substantially vertical longitudinal axis. The ring 360 has a plurality of gussets 356 leading to a plurality of pipes 354. As shown in FIG. 29, the plurality of gussets 356 have a sloped configuration to aid in guiding water towards the plurality of pipes 354 and to the liquid coolant 168 in the quench chamber 300 (FIG. 32). At or near an upper end of the baffle 350 may be a structural or attachment element 352 configured to aid in the attachment of the baffle 350 to the quench chamber 300. As shown specifically in FIG. 31, an additional plate or guide 357 may be located adjacent to the upper end 358 of the pipes 354. The plate or guide 357 is located inboard of the pipe 354. In this manner, gathered moisture is more efficiently guided towards the pipes 354. By effectively guiding the moisture with the gussets 354 and/or guides 357 to the pipes 354 and the sump (below), moisture re-entrainment with the syngas is mitigated and/or avoided altogether.

Referring to FIGS. 30A and 30B, close-up views of two configurations of the interface between a pipe 354 and the guiding gussets 356 of a baffle 350 (see e.g., FIG. 29) are shown. The gussets 356 may be configured so that they directly slope towards an upper end 358 of the pipe 354 (see e.g., FIG. 30A). In another embodiment, the gussets 356 may be configured wherein they slope towards the upper ends 358 of the pipes 354, but the upper end 358 extends higher than the bottom end of the sloping gussets 356 (see e.g., FIG. 30B). In any event, the gussets 356 are configured and sloped such that gathered liquid is guided towards the pipes 354 and to the liquid coolant 168 within the quench chamber 300.

Referring to FIG. 32, a portion of a quench chamber 300 is disclosed. This embodiment is similar in some aspects to the embodiment illustrated in FIG. 12. The baffle 350 includes at least one of the plurality of gussets 356 and the plurality of pipes 354 configured to provide an exit path for entrained liquid content collected on the side surface 312 of the baffle 350. The collected liquid content is guided downwards along the gussets 356 towards the pipes 354. A lower end of the pipes 354 may be partially immersed in the liquid coolant 168 in the quench chamber 300. Note that although the outside periphery construct (e.g., ring 360, gussets 356, pipe 354) of the baffle 350 is depicted as vertical, other configurations are possible under aspects of the present invention. For example, the outside of the baffle 350 may be canted slightly inward towards its lower end, so that the axis of the ring 360 and gussets 356 may be, for example, 5 degrees from vertical. Other angles are possible without departing from aspects of the invention. This angulation may further aid in effectively gathering moisture with the baffle 350 so to direct it to the quench chamber sump.

The entrainment mitigation mechanisms depicted in FIGS. 1-32 may be employed separately or in combination with one another. Moreover, as may be appreciated, the relative sizes, shapes, and geometries of the entrainment mitigation mechanisms may vary. The entrainment mitigation mechanisms may be employed in a quench chamber during the initial manufacturing, or the entrainment mitigation mechanisms may be retrofit into existing quench units. Further, the entrainment mitigation mechanisms may be adjusted based on operational parameters, such as the type of carbonaceous fuel, the system efficiency, the system load, or environmental conditions, among others to achieve the desired amount of flow damping.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:
1. A gasification quench chamber device comprising:
   a ring having a substantially vertical longitudinal axis;
   a plurality of pipes attached to the ring, each having an upper end and a lower end, wherein the plurality of lower ends extend downwards towards a sump in the gasification quench chamber; and
   a plurality of gussets configured to guide water towards the upper ends of the plurality of pipes.
2. The gasification quench chamber device of clause 1, wherein the plurality of pipes extend beyond a bottom edge of the ring.
3. The gasification quench chamber device of any preceding clause, wherein the plurality of pipes are configured to extend to a water surface in the quench chamber.
4. The gasification quench chamber device of any preceding clause, wherein the plurality of pipes are uniformly spaced around a circumference of the ring.
5. The gasification quench chamber device of any preceding clause, wherein the plurality of pipes have a substantially vertical axial axis.
6. The gasification quench chamber device of any preceding clause, wherein the ring is polygonal.
7. The gasification quench chamber device of any preceding clause, wherein each of the plurality of pipes are attached at a corner of the polygonal-shaped ring.
8. The gasification quench chamber device of any preceding clause, wherein the ring is circular.
9. The gasification quench chamber device of any preceding clause, wherein a cross section of each of the plurality of pipes is circular.
10. The gasification quench chamber device of any preceding clause, wherein the upper ends of the plurality of pipes adjoin to a bottom of the plurality of gussets.
11. The gasification quench chamber device of any preceding clause, wherein at least one of the ring, the plurality of pipes, and the plurality of gussets are angled inward at a lower portion of the device.
12. The gasification quench chamber device of any preceding clause, wherein an angle of the inwards angled item is about 5 degrees from vertical.
13. A gasification quench chamber comprising:
   a chamber having a liquid coolant disposed therein;
   a dip tube coupling a combustion chamber to the chamber and configured to direct syngas from the combustion chamber to the chamber to contact the liquid coolant and thereby product a cooled syngas; and
   a baffle disposed proximate to an exit path of the chamber, wherein the baffle comprises:
      a ring having a substantially vertical longitudinal axis;
      a plurality of pipes attached to the ring, each having an upper end and a lower end, wherein the plurality of lower ends extend downwards towards the liquid coolant; and
      a plurality of gussets configured to guide water towards the upper ends of the plurality of pipes.
14. A gasification quench chamber comprising:
   a chamber having a liquid coolant disposed therein;
   a dip tube coupling a combustion chamber to the chamber and configured to direct syngas from the combustion chamber to the chamber to contact the liquid coolant and thereby product a cooled syngas;
   a draft surrounding the dip tube and defining an annular passage there between;
      and
   a baffle disposed proximate to an exit path of the chamber, wherein the baffle comprises:
      a ring having a substantially vertical longitudinal axis;
      a plurality of pipes attached to the ring, each having an upper end and a lower end, wherein the plurality of lower ends extend downwards towards the liquid coolant; and
      a plurality of gussets configured to guide water towards the upper ends of the plurality of pipes.
15. A gasification quench chamber device comprising:
   a ring having a substantially vertical longitudinal axis;
   a plurality of extension plates attached to the ring, each having an upper end and a lower end, wherein the plurality of lower ends extend downward towards a sump in a gasification quench chamber; and
   a plurality of gussets configured to guide water towards the upper ends of the plurality of extension plates.
16. The gasification quench chamber device of any preceding clause, wherein each pair of gussets are configured in a V-shape around a periphery of the ring.

## Claims

1. A gasification quench chamber device (310, 350) comprising:
a ring (318,360) having a substantially vertical longitudinal axis;
a plurality of pipes (354) attached to the ring (318, 360), each having an upper end (358) and a lower end, wherein the plurality of lower ends extend downwards towards a sump in the gasification quench chamber (300); and
a plurality of gussets (314, 356) configured to guide water towards the upper ends (358) of the plurality of pipes (354).

2. The gasification quench chamber device (310, 350) of claim 1, wherein the plurality of pipes (354) extend beyond a bottom edge of the ring (318, 360).

3. The gasification quench chamber device (310, 350) of any preceding claim, wherein the plurality of pipes (354) are uniformly spaced around a circumference of the ring (318, 360).

4. The gasification quench chamber device (310, 350) of any preceding claim, wherein the plurality of pipes (354) have a substantially vertical axial axis.

5. The gasification quench chamber device (310, 350) of any preceding claim, wherein the ring (318, 360) is polygonal.

6. The gasification quench chamber device (310, 350) of any preceding claim, wherein each of the plurality of pipes (354) are attached at a corner of the polygonal-shaped ring (318, 360).

7. The gasification quench chamber device (310, 350) of any preceding claim, wherein the ring (318,360) is circular.

8. The gasification quench chamber device (310, 350) of any preceding claim, wherein a cross section of each of the plurality of pipes (354) is circular.

9. The gasification quench chamber device (310, 350) of any preceding claim, wherein the upper ends (358) of the plurality of pipes (354) adjoin to a bottom of the plurality of gussets (314, 356).

10. The gasification quench chamber device (310, 350) of any preceding claim, wherein at least one of the ring (318,360), the plurality of pipes (354), and the plurality of gussets (314, 356) are angled inward at a lower portion of the device.
